# EUROPEAN PATENT SPECIFICATION

(11) **EP 3 085 487 B1**
(45) Date of publication and mention of the grant of the patent: **10.04.2019**
(21) Application number: 15166423.2
(22) Date of filing: 05.05.2015
(51) Int. Cl.: B23K 26/06, B23K 26/40, B28D 1/22, B28D 5/00, C03B 33/09, B23K 26/00, B23K 26/38, B23K 26/08, B23K 26/146

(54) **BRITTLE OBJECT CUTTING APPARATUS AND CUTTING METHOD THEREOF**
SCHNEIDVORRICHTUNG FÜR BRÜCHIGE OBJEKTE UND SCHNEIDVERFAHREN DAFÜR
APPAREIL DE DÉCOUPE D'OBJET FRAGILE ET PROCÉDÉ DE DÉCOUPAGE ASSOCIÉ

(30) Priority: 24.04.2015 TW 104113321
(43) Date of publication of application: 26.10.2016
(73) Proprietor: NANOPLUS LTD., Grand Cayman, KY1-1208 (KY)
(72) Inventor: Lu, Hung-Tu, Taipei City 115 (TW); Kondratenko, Vladimir, Moscow 111402 (RU); Naumov, Alexander, Moscow 117241 (RU); Hsu, Chih-Peng, Taoyuan City 320 (TW); Hsu, Wei-Nung, Taipei City 100 (TW)
(74) Representative: Michalski Hüttermann & Partner Patentanwälte mbB

(56) References cited:
- EP-A1- 1 862 280
- WO-A1-2006/002168
- US-A1- 2006 278 619
- US-A1- 2008 035 617
- US-B1- 6 501 047

## Description

### BACKGROUND OF THE INVENTION

### 1. Field of the Invention

The present invention relates to a cutting apparatus and cutting method thereof, in particular to a brittle object cutting apparatus and cutting method thereof, which apply laser to generate thermally-induced mechanical stress in order to cut brittle objects (see e.g. US 2008035617).

### 2. Description of the Related Art

Cutting brittle materials such as glass, sapphire, silicon, gallium arsenide or ceramics by producing a notch along the desired dividing line, along which breaking stresses are subsequently produced by subjection to mechanical forces, which leads to the complete separation of the brittle material, is already known.

In order to cut the brittle material in this way, the depth of the notch must be at least one-third of the flat material thickness. The notch can be applied mechanically or by means of lasers. Particularly for dicing chips from substrates (wafers), laser methods that create a notch by ablation into the material are increasingly being used. The notches are typically only a few µm wide and have an approximate depth of one third the flat material thickness. The notch depth is produced proportionately to the total thickness of the flat material, depending on its brittleness. It is disadvantageous that every volume of removed material potentially contributes to the microscopic contamination of the material being processed. Since the aspect ratio between notch width and notch depth is critical to all these laser processes, complex apparatuses are needed and the notch is created relatively slowly. Deep notches for thick wafers therefore require increasingly more process time.

Such methods are disclosed in US 20050153525 or US 20040228004, for example. After production of the notches, the wafer is completely cut by applying mechanical (impulse) energy or forces, for example tensile force (stretching of films), bending forces (breaking over ridges) or a combination thereof.

Mechanical application of breaking forces is geometrically relatively imprecise. Therefore fracture flaws can occur if the breakage lines do not run perpendicular to the material thickness or if two breakage lines intersecting at one point do not meet one another at the intended angle. Particularly in chip production, such breaking faults lead to a reduction of yield and must therefore be avoided. In addition, material particles split off, which can entail a macroscopic contamination of the surface of the flat material.

Instead of cutting a flat material by material removal, e.g., in form of a notch as described, a known method is to produce a mechanically-induced initial crack, which is subsequently propagated through the flat material by means of thermally-induced mechanical stresses. Such a method (thermal laser separation, TLS) is described in WO 93/20015. It is disadvantageous particularly if a flat material separated into several parallel strips is to be cut in a second axis, for example, orthogonally to the first separation direction, for example, into individual rectangles in the dicing of a wafer into individual chips. Since a new initial crack must be made at the beginning of each dividing line in the first separation direction, the process is very time-consuming and the mechanical scoring system is subject to high wear.

Similarly, a method for cutting brittle flat materials by laser beam is disclosed in US 8,212,180, in which the notch generating process and the thermally-induced mechanical stress applying process are two independent processes. Thus, the affected points on the brittle flat materials may be shifted between the two processes, leading to problems such as the breakage lines do not run perpendicular to the material thickness.

Therefore, it is a primary issue to provide a brittle object cutting apparatus and method thereof for cutting a brittle object to solve the above mentioned flaws. The details of one or more embodiments of the invention are set forth in the descriptions below. Other features, objects or advantages of the invention will be apparent from the following drawings and detailed descriptions of the embodiments, and also from the appending claims.

### SUMMARY OF THE INVENTION

In view of the shortcomings of the prior art, it is a primary objective of the present invention to provide a brittle object cutting apparatus and method thereof for cutting a brittle object.

To achieve the aforementioned objective, the present invention provides a brittle object cutting apparatus for cutting a brittle object, comprising: a scribing laser unit, configured to emit a scribing laser on the brittle object; a first heating laser unit, configured to emit a first heating laser; a second heating laser unit, configured to emit a second heating laser, wherein the first heating laser and the second heating laser respectively located on opposite sides of the scribing laser; two cooling units, configured to provide a coolant to cool the brittle object, one of the two cooling units disposed at a side of the first heating laser and opposite to the scribing laser so as to cool the brittle object irradiated by the first heating laser, another one of the two cooling units disposed at a side of the second heating laser and opposite to the scribing laser so as to cool the brittle object irradiated by the second heating laser; and a processing module, configured to selectively control the scribing laser unit, the first heating laser unit and the cooling unit, or the scribing laser unit, the second heating laser unit and the cooling unit to cut along one of a plurality of first-axis and second-axis dividing lines on the brittle object sequentially with the scribing laser, the first heating laser and the coolant, or sequentially with the scribing laser, the second heating laser and the coolant in a machining operation, wherein the first heating laser and the coolant, or the second heating laser and the coolant processes on the brittle subject simultaneously.

Preferably, a machining direction of the scribing laser, the first heating laser and the coolant may be opposite to a machining direction of the scribing laser, the second heating laser and the coolant.

Preferably, the scribing laser may scribe the plurality of first-axis dividing lines with a predetermined distance, originated from an edge of the brittle object, on the brittle object, and the scribing laser scribes the plurality of second-axis dividing lines completely or only scribes intersections between the plurality of first-axis and second-axis dividing lines with the predetermined distance on the brittle object.

To achieve the aforementioned objective, the present invention further provides brittle object cutting apparatus for cutting a brittle object, comprising: a scribing laser unit, configured to emit a scribing laser on the brittle object via a scribing optical path; a heating laser unit, configured to emit a heating laser; a first light guide unit, configured to guide the heating laser to heat the brittle object via a first heating optical path or to pass the first light guide unit, or configured to guide a portion of the heating laser to pass the first heating optical path and another portion of the heating laser to pass through the first light guide unit; a second light guide unit, configured to guide the heating laser passed from the first light guide unit to heat the brittle object via a second heating optical path, wherein the first heating optical path and the second heating optical path respectively located on opposite sides of the scribing optical path when the first heating optical path, the second heating optical path and the scribing optical path are emitted on the brittle object; two cooling units, configured to provide a coolant to cool the brittle object, one of the two cooling units disposed at a side of the first heating optical path and opposite to the scribing laser so as to cool the brittle object irradiated by the first heating laser, another one of the two cooling units disposed at a side of the second heating optical path and opposite to the scribing laser so as to cool the brittle object irradiated by the second heating laser; and a processing module, configured to selectively control the scribing laser unit, the heating laser unit, the first light guide unit and the cooling unit to cut along one of a plurality of first-axis and second-axis dividing lines on the brittle object sequentially with the scribing laser in the scribing optical path, the heating laser in the first heating optical path and the coolant, or sequentially with the scribing laser in the scribing optical path, the heating laser in the second heating optical path and the coolant in a machining operation, wherein the heating laser in the first heating optical path and the coolant, or the heating laser in the second heating optical path and the coolant processes on the brittle subject simultaneously.

Preferably, a machining direction of the scribing laser in the scribing optical path, the heating laser in the first heating optical path and the coolant may be opposite to a machining direction of the scribing laser in the scribing optical path, the heating laser in the second heating optical path and the coolant.

Preferably, the scribing laser may scribe the plurality of first-axis dividing lines with a predetermined distance, originated from an edge of the brittle object, on the brittle object, and the scribing laser scribes the plurality of second-axis dividing lines completely or only scribes intersections between the plurality of first-axis and second-axis dividing lines with the predetermined distance on the brittle object.

To achieve the aforementioned objective, the present invention further provides a method of cutting a brittle object with a plurality of first-axis and second-axis dividing lines, comprising steps of: providing a scribing laser unit to emit a scribing laser; providing a first heating laser unit to emit a first heating laser; providing a second heating laser unit to emit a second heating laser; scribing the brittle object by emitting the scribing laser along one of the plurality of first-axis and second-axis dividing lines on the brittle object; and heating the brittle object by selectively applying the first heating laser or the second heating laser and cooling the heated brittle object via a coolant providing by a cooling unit right after heating by the first heating laser or the second heating laser along one of the plurality of first-axis and second-axis dividing lines, wherein the scribing step, and the heating step and the cooling step are performed in the same machining operation.

Preferably, the method of cutting a brittle object with a plurality of dividing lines may further comprise the step of: adjusting emitting positions of the first heating laser and the second heating laser, respectively, on the brittle object to be at lateral sides of an emitting position of the scribing laser on the brittle object.

Preferably, a machining direction of the scribing laser, the first heating laser and the coolant may be opposite to a machining direction of the scribing laser, the second heating laser and the coolant.

Preferably, the method of cutting a brittle object with a plurality of dividing lines may further comprise the step of: controlling the scribing laser to scribe the plurality of first-axis dividing lines in a with a predetermined distance, originated from an edge of the brittle object, on the brittle object.

Preferably, the method of cutting a brittle object with a plurality of dividing lines may further comprise the step of: controlling the scribing laser to scribe the plurality of second-axis dividing lines completely or only scribes intersections between the plurality of first-axis dividing lines and the plurality of second-axis dividing lines with the predetermined distance on the brittle object.

The brittle object cutting apparatus and method thereof for cutting a brittle object according to the present invention have one or more of the following advantages:
(1) The brittle object cutting apparatus and method thereof simultaneously perform the processes of scribing, heating and cooling, thereby enhancing the edge quality of the brittle objects.
(2) The brittle object cutting apparatus and method thereof set up the heating laser at lateral sides of the scribing laser, such that the heating laser located behind the scribing laser during the machining process, i.e. the brittle objects are irradiated with the scribing laser followed by the heating laser in both forward and reverse direction without rotating the brittle object, thereby saving cycle time of moving the brittle object and further improving efficiency.
(3) The brittle object cutting apparatus and method thereof are provided with the first light guide unit and the second light guide unit so as to form the first heating laser and the second heating laser, separately, thereby reducing the amount of heating laser units and saving cost.

### BRIEF DESCRIPTION OF THE DRAWINGS

The features, objects or advantages of the invention will be apparent from the following drawings and detailed descriptions of the embodiments.
FIG. 1 is a structurally schematic view of the first embodiment of the brittle object cutting apparatus according to the present invention.
FIG. 2 is a schematic view of the first aspect in the first embodiment of the brittle object cutting apparatus according to the present invention.
FIG. 3 is a schematic view of the second aspect in the first embodiment of the brittle object cutting apparatus according to the present invention.
FIG. 4 is a schematic view of the first aspect in the second embodiment of the brittle object cutting apparatus according to the present invention.
FIG. 5 is a schematic view of the second aspect in the second embodiment of the brittle object cutting apparatus according to the present invention.
FIG. 6 is a schematic view of the first aspect in the third embodiment of the brittle object cutting apparatus according to the present invention.
FIG. 7 is a schematic view of the second aspect in the third embodiment of the brittle object cutting apparatus according to the present invention.
FIG. 8 is a flow chart of the method of cutting brittle object according to the present invention.
FIG. 9 is a schematic view of the method of cutting brittle object according to the present invention.

### DESCRIPTION OF THE PREFERRED EMBODIMENTS

The present invention is illustrated by the following examples. However, it should be understood that the invention is not limited to the specific details of these examples. Those in the art will understand that a number of variations may be made in the disclosed embodiments, all without departing from the scope of the invention, which is defined solely by the appended claims. The same component will be described with the same reference numeral. In addition, the arrow in the figures indicates the moving direction of the brittle object.

In the following descriptions, the brittle object is embodied as wafer, such as sapphire wafers. However, other brittle objects, such as glass, silicon, gallium arsenide or ceramics, may be applied. The following preferred embodiments should not be construed as limitations to the present invention.

In the embodiments, the plurality of dividing lines on the brittle objects may comprise a plurality of first-axis dividing lines and a plurality of second-axis dividing lines. Wherein, the first-axis may be perpendicular to the second-axis. The brittle object cutting apparatus according to the present invention individually cuts along the plurality of first-axis dividing lines while continuously moving the brittle object back and forth, i.e. forward and reverse direction. Then, the brittle object cutting apparatus according to the present invention subsequently and individually cuts along the plurality of second-axis dividing lines while continuously moving the brittle object back and forth, thereby dicing the brittle object.

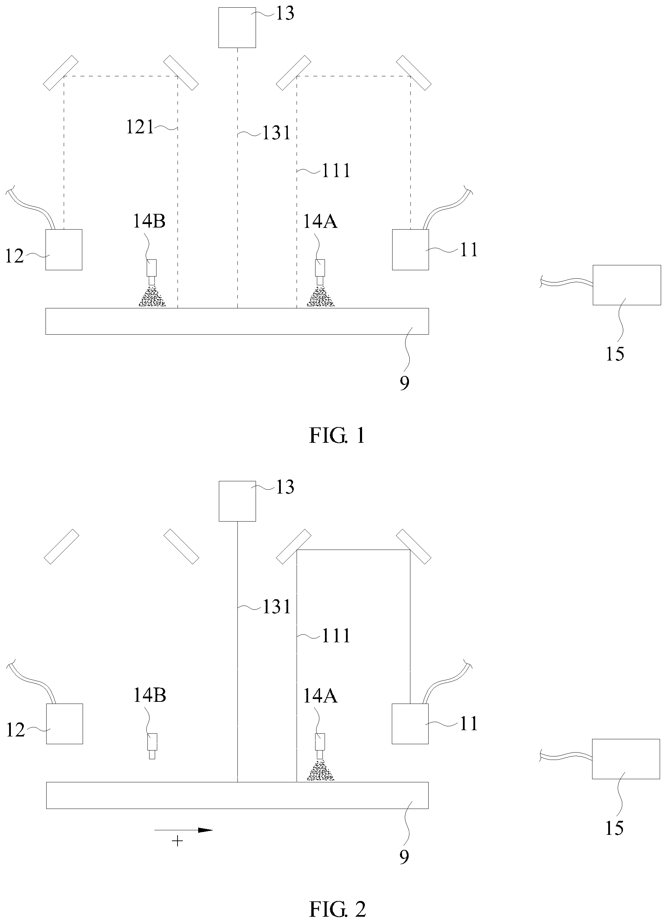

With reference to FIG. 1 for a structurally schematic view of the first embodiment of the brittle object cutting apparatus according to the present invention, the brittle object cutting apparatus for cutting a brittle object comprises a first heating laser unit 11, a second heating laser unit 12, a scribing laser unit 13, two cooling units 14A and 14B, and a processing module 15. The first heating laser unit 11 and the second heating laser unit 12 may be a CO₂ laser, and the first heating laser unit 11 may emit a first heating laser 111 and the second heating laser unit 12 may emit a second heating laser 121. The scribing laser unit 13 may be a UV laser, and the scribing laser unit 13 may emit a scribing laser 131 on the brittle object 9, wherein the first heating laser 111 and the second heating laser 121 respectively located on opposite sides of the scribing laser 131 when the first heating laser 111, the second heating laser 121 and the scribing laser 131 are emitted on the brittle object 9. That is, the first heating laser 111 is located behind the scribing laser 131 while machining in the forward direction, however, the second heating laser 121 is located behind the scribing laser 131 while machining in the reverse direction. The cooling units 14 may provide a coolant to cool the brittle object 9; wherein one of the two cooling units 14A disposed at a side of the first heating laser 111 and opposite to the scribing laser 131 so as to cool the brittle object 9 irradiated by the first heating laser 111, another one of the two cooling units 14B disposed at a side of the second heating laser 121 and opposite to the scribing laser 131 so as to cool the brittle object 9 irradiated by the second heating laser 121. The processing module 15 may be a central processing unit (CPU) or a microcontroller unit (MCU). The processing module 15 selectively controls the scribing laser unit 13, the first heating laser unit 11 and the cooling unit 14A, or controls the scribing laser unit 13, the second heating laser unit 12 and the another cooling unit 14B to perform a machining operation. Thus, in one machining operation, e.g. in machining along a first axis dividing line, the scribing laser 131, the first heating laser 111 and the coolant are sequentially applied along one of the plurality of dividing lines on the brittle object 9; or the scribing laser 131, the second heating laser 121 and the coolant are sequentially applied along one of the plurality of dividing lines on the brittle object 9. It shall be noted that the first heating laser unit 11 and the cooling unit 14A, or the second heating laser unit 12 and the another cooling unit 14B simultaneously heats and cools the brittle object, respectively.

Of course, one of ordinary skill in the art would appreciate that the brittle object cutting apparatus may further comprise guiding units to guide light, focusing lens, a supporting unit to move the brittle object 9, or a driving unit, which will not be further described here. Wherein, the supporting unit for moving the brittle object 9, or the driving unit thereof are controlled be the processing unit 15, so as to move the brittle object 9 in a first axis or a second axis, or to rotate around a rotation axis. In addition, the focusing lens, mounted on a third axis, may also be controlled by the processing unit 15, so as to focus the laser on the surface of the brittle object 9. The first axis, the second axis, and the rotation axis are together. The third axis is separated from the first axis, the second axis and the rotation axis.

In a preferred embodiment, there may be X-axis, Y-axis with mounted on this stage C axis to rotate (align) the brittle object along dividing lines, and the Z-axis, in which X-axis and Y-axis are used for moving the brittle objects. Z-axis is used to move the objective lenses in order to focus the laser on the surface of the brittle object, instead of moving the brittle object closer or far from the focusing lens. That is, Z-axis is to keep the lens in the housing and change the focus, i.e. working distance (WD) between the lens and the brittle object. In addition, the rotation axis is mounted on the X, Y stage for rotating/aligning the brittle object along the dividing lines, turning the brittle object on 90 degrees after the first direction, e.g. forward direction (+), has been cut, and being vacuum chuck also.

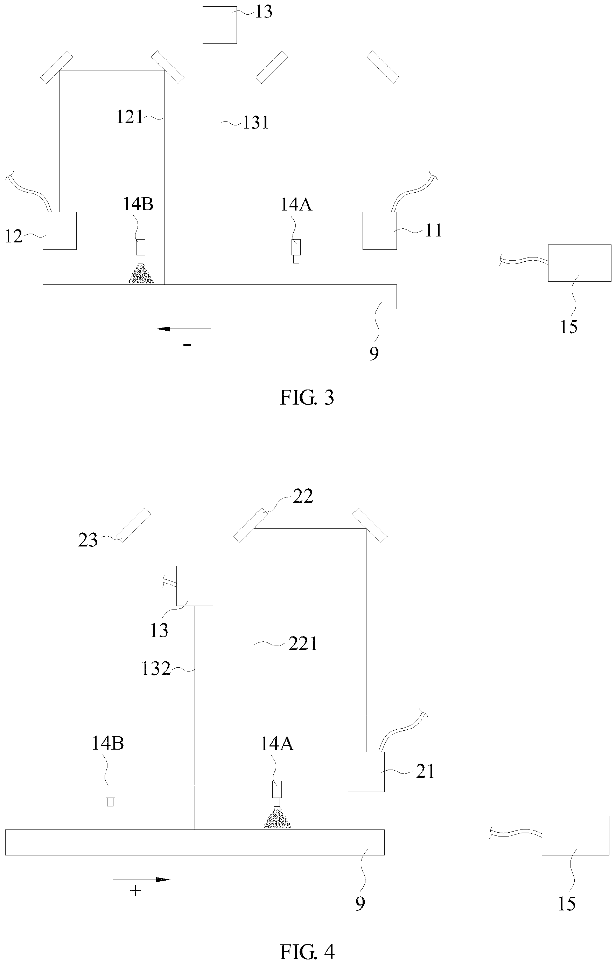

With reference to FIGs. 2 and 3 for schematic views of the first aspect and the second aspect in the first embodiment of the brittle object cutting apparatus according to the present invention, for instance, when the brittle object cutting apparatus cuts the brittle object 9 along first axis dividing lines in the forward direction (+), the processing module 15 controls the scribing laser unit 13 to scribe, and the first heating laser unit 11 and the cooling unit 14A to perform the heating and cooling process. Then, when the brittle object cutting apparatus cuts the brittle object 9 along first axis dividing lines in the reverse direction (-), the processing module 15 controls the scribing laser unit 13 to scribe, the second heating laser unit 12 and the another cooling unit 14B to perform the heating and cooling process. In case of that the brittle object cutting apparatus cuts the brittle object 9 along the second-axis dividing lines, the process is similar to those cutting along the first-axis dividing lines and will be further described hereinafter. Therefore, after the brittle object cutting apparatus cuts the brittle object 9 in the forward direction by using the scribing laser unit 13, the first heating laser unit 11 and the cooling unit 14A, sequentially, the scribing laser unit 13, the second heating laser unit 12 and the another cooling unit 14B may be directly applied in the reverse direction in the machining process, thereby reducing the machining time as moving the brittle objects.

In addition, in the machining process of moving the brittle object 9 in the forward direction along the first-axis dividing lines by the brittle object cutting apparatus, the scribing laser unit 13 and the first heating laser unit 11 are applied simultaneously, and the cooling unit 14A cools the heated brittle object right after heating by the first heating laser unit 11. Similarly, in the machining process of moving the brittle object 9 in the reverse direction along the first-axis dividing lines by the brittle object cutting apparatus, the scribing laser unit 13 and the second heating laser unit 12 are applied simultaneously, and the another cooling unit 14B cools the heated brittle object right after heating by the second heating laser unit 12. Therefore, the brittle object cutting apparatus according to the present invention may solve the problems of poor edge quality or low precision due to deviation in prior art.

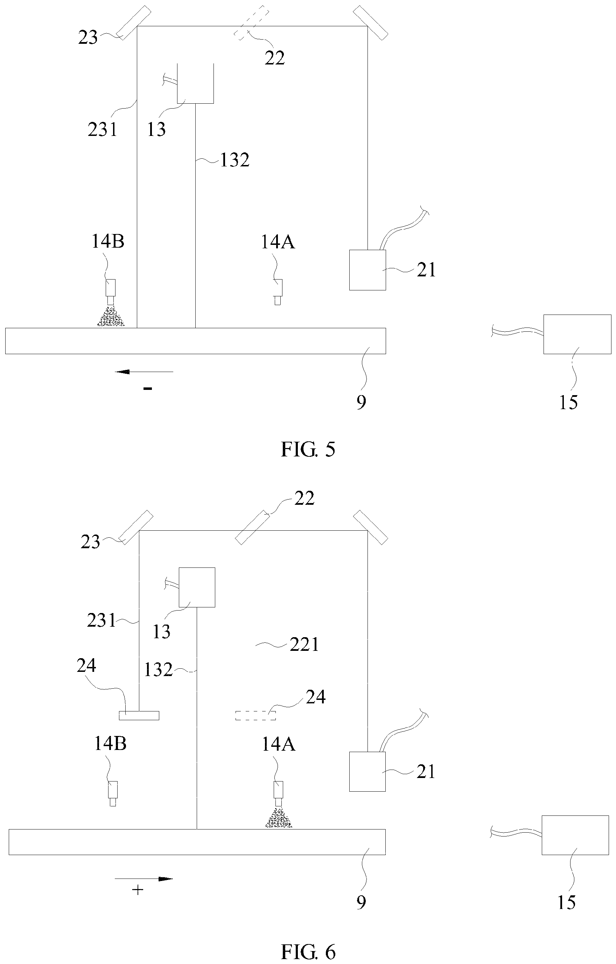

With reference to FIGs. 4 and 5 for a schematic view of the first aspect and the second aspect in the second embodiment of the brittle object cutting apparatus according to the present invention, in the instant embodiment, the brittle object cutting apparatus comprises a heating laser unit 21, a first light guide unit 22, a second light guide unit 23, a scribing laser unit 13, two cooling units 14A, 14B and a processing module 15. The heating laser unit 21 may emit a heating laser. The first light guide unit 22 may be movable reflective mirror, or the first light guide unit 22 may be a splitter. Wherein, the detailed description of the first light guide unit 22 being embodied as splitter will be further described in the next embodiment. Particularly, the first light guide unit 22 guides the heating laser to heat the brittle object 9 via a first heating optical path 221 or to pass the laser radiation to the second light guide unit 23 when the first light guide unit 22 is moved aside. The second light guide unit 23 guides the heating laser passed from the heating laser unit 21 to heat the brittle object 9 via a second heating optical path 231. The scribing laser unit 13 may emit a scribing laser on the brittle object 9 via a scribing optical path 132, wherein the first heating optical path 221 and the second heating optical path 231 respectively located on opposite sides of the scribing optical path 132, i.e. opposite sides of the scribing laser, when the first heating optical path 221, the second heating optical path 231 and the scribing optical path 132 are aligned on the brittle object 9 along the determined dividing lines. The two cooling units 14A, 14B may provide a coolant to cool the brittle object 9, which is similar to the previous embodiment and will not be further described here. That is, the first heating optical path 221 is located behind the scribing optical path 132 while machining in a forward direction (+), and the coolant is located behind the first heating optical path 221, however, the second heating optical path 231 is located behind the scribing optical path 132 while machining in a reverse direction (-), and the coolant is located behind the second heating optical path 231. The processing module 15 may selectively control the heating laser unit 21, the first light guide unit 22, the scribing laser unit 13 and the two cooling units 14A, 14B to perform a machining operation. Wherein, the scribing laser in the scribing optical path 132, the heating laser in the first heating optical path 221 and the coolant are sequentially applied along one of a plurality of dividing lines, such as first-axis dividing lines, on the brittle object 9; or the scribing laser in the scribing optical path 132, the heating laser in the second heating optical path 231 and the coolant are sequentially applied along one of a plurality of dividing lines, such as second-axis dividing lines, on the brittle object 9. Similarly, the heating laser in the first heating optical path 221 and the coolant, or the heating laser in the second heating optical path 231 and the coolant processes on the brittle subject simultaneously.

For instance, when the brittle object cutting apparatus cuts the brittle object 9 along the first-axis dividing lines in a forward direction, the processing module 15 controls the first light guide unit 22 to change the original optical path of the heating laser unit 21 so as to emit on the brittle object 9 via the first heating optical path 221. At this point, the brittle object cutting apparatus performs the machining process by sequentially applying the scribing laser in the scribing optical path 132 to scribe, and using the heating laser in the first heating optical path 221 and the coolant to heat and cool the brittle object, respectively, along the first-axis dividing lines. However, when the brittle object cutting apparatus cuts the brittle object 9 along the first-axis dividing lines in a reverse direction, the processing module 15 controls the first light guide unit 22 to move it aside without changing the original optical path of the heating laser unit 21 so that the heating laser from the heating laser unit 21 may be received by the second light guide unit 23. Therefore, the second light guide unit 23 may change the original optical path of the heating laser unit 21 so as to emit on the brittle object 9 via the second heating optical path 231. At this point, the brittle object cutting apparatus performs the machining process by sequentially applying the scribing laser in the scribing optical path 132 to scribe, and using the heating laser in the second heating optical path 231 and the coolant to heat and cool the brittle object, respectively, along the first-axis dividing lines.

From the above, after the brittle object cutting apparatus cuts the brittle object 9 in the forward direction by scribing laser, the heating laser in the first heating optical path 221 and the coolant, the heating laser from the second heating optical path 231 and the coolant from the another cooling unit 14B may be directly applied to heat and cool the brittle object 9, so as to cut the brittle object 9 in the reverse direction, thereby reducing the machining time while using only one heating laser unit.

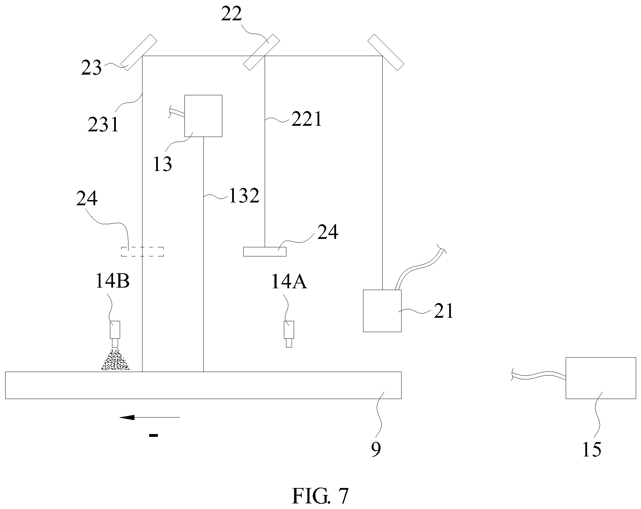

Please refer to FIGs. 6 and 7 for a schematic view of the first aspect and the second aspect in the third embodiment of the brittle object cutting apparatus according to the present invention. In the instant embodiment, the first light guide unit 22 is embodied as a splitter. In a preferred embodiment, the transmittance and reflectance of the splitter are 50% and 50%, respectively. However, the transmittance and reflectance of the splitter may be varied depending on the machining process or the configuration designed by designers. For instance, the transmittance and reflectance of the splitter may respectively be 40% and 60%, 30% and 70%, etc.

In the present embodiment, the configuration of the components in the apparatus is similar to the previous embodiment and will not be further described herein. However, it should be noted that there's a movable blocking unit 24 in both the first heating optical path 221 and the second heating optical path 231, respectively. The movable blocking units 24 selectively blocks the heating lasers either in the first heating optical path 221 or in the second heating optical path 231 under the control of the processing module 15.

For example, when the brittle object cutting apparatus cuts the brittle object 9 along the first-axis dividing lines in a forward direction (+), the processing module 15 controls the blocking unit 24 in the second heating optical path 231 moving to block the heating laser in the second heating optical path 231, so that only the heating laser in the first heating optical path 221 irradiates on the brittle object 9. At this point, the brittle object cutting apparatus performs the machining process by sequentially applying the scribing laser in the scribing optical path 132 to scribe, and using the heating laser in the first heating optical path 221 and the coolant to heat and cool the brittle object, respectively, along the first-axis dividing lines. Then, when the brittle object cutting apparatus cuts the brittle object 9 along the first-axis dividing lines in a reverse direction (-), the processing module 15 controls the blocking unit 24 in the first heating optical path 221 moving to block the heating laser in the first heating optical path 221, so that only the heating laser in the second heating optical path 231 irradiates on the brittle object 9. At this point, the brittle object cutting apparatus performs the machining process by sequentially applying the scribing laser in the scribing optical path 132 to scribe, and using the heating laser in the second heating optical path 231 and the coolant to heat and cool the brittle object, respectively, along the first-axis dividing lines.

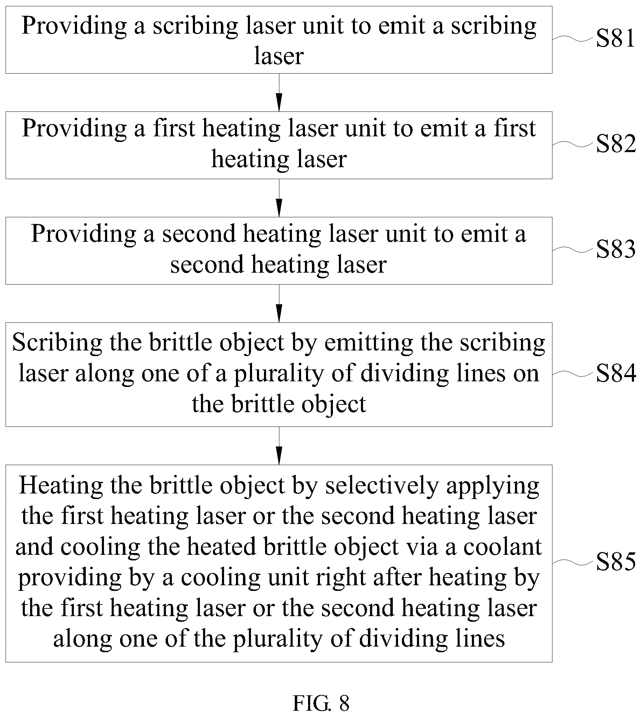

With reference to FIG. 8 for a flow chart of the method of cutting brittle object according to the present invention, the method of cutting brittle object in the embodiment may be applied in the brittle object cutting apparatus according to the first embodiment of the present invention. However, by adopting various modifications or functionally equivalents without departing from the scope and the spirit of the present invention, the method of cutting brittle object may be applied to the brittle object cutting apparatus according to the second and the third embodiments of the present invention as well. The method of cutting a brittle object comprises the following steps of:
(S81) Providing a scribing laser unit to emit a scribing laser.
(S82) Providing a first heating laser unit to emit a first heating laser.
(S83) Providing a second heating laser unit to emit a second heating laser.
(S84) Scribing the brittle object by emitting the scribing laser along one of a plurality of dividing lines on the brittle object.
(S85) Heating the brittle object by selectively applying the first heating laser or the second heating laser and cooling the heated brittle object via a coolant providing by a cooling unit right after heating by the first heating laser or the second heating laser along one of the plurality of dividing lines. Wherein, the scribing step, and the heating step and the cooling step are performed in the same machining operation while moving of the brittle object.

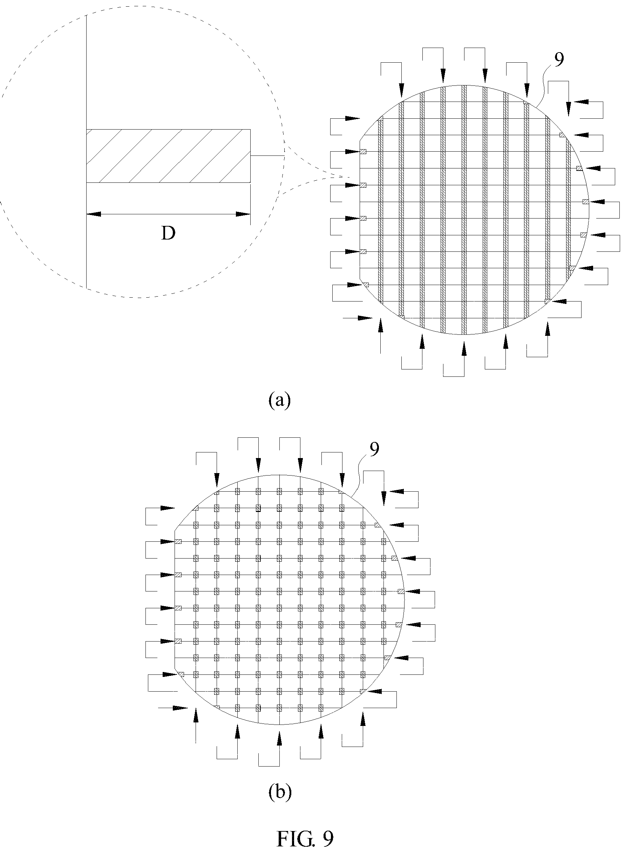

Please refer to FIG. 9 for a schematic view of the method of cutting brittle object according to the present invention. In the embodiments described above, the notches generating by the scribing laser unit 13 may preferably have a width of 2-10 µm. The depth of the notches may be less than 1/10 of the thickness of the brittle object 9, for instance, 3-15 µm for the 90-130 um wafer thickness. The cutting velocity lies in the range of 100-300 mm/s, or even faster. However, the machining parameters above of the brittle object cutting apparatus according to the present invention is only for illustrations of a few aspects according to the present invention, and should not be construed as limitations.

It should be noted, in the first-axis dividing lines, the scribing laser 131 from the scribing laser unit 13 only scribes a predetermined distance D, which originated from an edge of the brittle object 9, on the brittle object 9. In a preferred embodiment, the predetermined distance D may range from 30 µm to 1000 µm. However, in the second-axis dividing lines, the scribing laser unit 13 may scribe the dividing lines into two distinct scribing patterns. As shown in FIG. 9(a), in an embodiment, the scribing laser unit 13 scribes along the second-axis dividing lines on the brittle object 9 entirely and completely. Contrarily, as shown in FIG. 9(b), in another embodiment, the scribing laser unit 13 only scribes intersections between the plurality of dividing lines with the predetermined distance D, 5-100 um for instance, along the second-axis on the brittle object. Wherein, the center of the predetermined distance D may be the intersection between the plurality of first-axis dividing lines and the plurality of second-axis dividing lines.

In the brittle object cutting apparatus and cutting method thereof according to the present invention, the second-axis dividing lines may be cut after all the first-axis dividing lines have been cut. In addition, the machining process of both the first-axis dividing lines and the second-axis dividing lines may be started in either forward direction or reverse direction. The brittle object cutting apparatus and cutting method thereof according to the present invention may cut each the first-axis dividing lines sequentially or randomly. After each of the first-axis dividing lines is cut, the brittle object 9 may be rotated, e.g. 90 degrees, and each of the second-axis dividing lines may further be sequentially or randomly cut. In the figures, both the first-axis dividing lines and the second-axis dividing lines is sequentially cut as an example, and should not be construed as limitations.

The detailed descriptions and embodiments of the method of cutting a brittle object according to the present invention have been described in the section describing the brittle object cutting apparatus according to the present invention, thus, will not be described again to be concise.

The present invention has been described with some preferred embodiments thereof and it is understood that many changes and modifications in the described embodiments can be carried out without departing from the scope of the invention that is intended to be limited only by the appended claims.

## Claims

1. A brittle object cutting apparatus for cutting a brittle object (9), comprising:
a scribing laser unit (13), configured to emit a scribing laser (131) on the brittle object (9),
a first heating laser unit (11), configured to emit a first heating laser (111);
a second heating laser unit (12), configured to emit a second heating laser (121), wherein the first heating laser (111) and the second heating laser (121) respectively located on opposite sides of the scribing laser (131);
two cooling units (14A, 14B), configured to provide a coolant to cool the brittle object (9), one of the two cooling units (14A) disposed at a side of the first heating laser (111) and opposite to the scribing laser (131) so as to cool the brittle object (9) irradiated by the first heating laser (111), another one of the two cooling units (14B) disposed at a side of the second heating laser (121) and opposite to the scribing laser (131) so as to cool the brittle object (9) irradiated by the second heating laser (121); and
a processing module (15), configured to selectively control the scribing laser unit (13), the first heating laser unit (11) and the cooling unit (14A), or the scribing laser unit (13), the second heating laser unit (12) and the cooling unit (14B), to cut along one of a plurality of first-axis and second-axis dividing lines on the brittle object (9) sequentially with the scribing laser (131), the first heating laser (111) and the coolant, or sequentially with the scribing laser (131), the second heating laser (121) and the coolant in a machining operation, wherein the first heating laser (111) and the coolant, or the second heating laser (121) and the coolant processes on the brittle subject (9) simultaneously.

2. The brittle object cutting apparatus of claim 1, wherein a machining direction of the scribing laser (131), the first heating laser (111) and the coolant is opposite to a machining direction of the scribing laser (131), the second heating laser (121) and the coolant.

3. The brittle object cutting apparatus of claim 1 or 2, wherein the scribing laser (131) is configured for scribing the plurality of first-axis dividing lines with a predetermined distance (D), originated from an edge of the brittle object (9), on the brittle object (9), and the scribing laser (131) is further configured for scribing the plurality of second-axis dividing lines completely for or only scribing intersections between the plurality of first-axis and second-axis dividing lines with the predetermined distance (D) on the brittle object (9).

4. A brittle object cutting apparatus for cutting a brittle object, comprising:
a scribing laser unit (13), configured to emit a scribing laser on the brittle object (9) via a scribing optical path (132);
a heating laser unit (21), configured to emit a heating laser;
a first light guide unit (22), configured to selectively guide the heating laser to heat the brittle object (9) via a first heating optical path (221) or to pass the first light guide unit (22), or configured to guide a portion of the heating laser to pass the first heating optical path (221) and another portion of the heating laser to pass through the first light guide unit (221);
a second light guide unit (23), configured to guide the heating laser passed from the first light guide unit (22) to heat the brittle object (9) via a second heating optical path (231), wherein the first heating optical path (221) and the second heating optical path (231) respectively located on opposite sides of the scribing optical path (132) when the first heating optical path (221), the second heating optical path (231) and the scribing optical path (132) are emitted on the brittle object (9);
two cooling units (14A, 14B), configured to provide a coolant to cool the brittle object (9), one of the two cooling units (14A) disposed at a side of the first heating optical path (221) and opposite to the scribing laser so as to cool the brittle object (9) irradiated by the first heating laser, another one of the two cooling units (14B) disposed at a side of the second heating optical path (231) and opposite to the scribing laser so as to cool the brittle object (9) irradiated by the second heating laser; and
a processing module (15), configured to selectively control the scribing laser unit (13), the heating laser unit (21), the first light guide unit (22) and the cooling unit (14A) to cut along one of a plurality of first-axis and second-axis dividing lines on the brittle object (9) sequentially with the scribing laser in the scribing optical path (132), the heating laser in the first heating optical path (221) and the coolant, or sequentially with the scribing laser in the scribing optical path (132), the heating laser in the second heating optical path (231) and the coolant in a machining operation, wherein the heating laser in the first heating optical path (221) and the coolant, or the heating laser in the second heating optical path (231) and the coolant process on the brittle subject (9) simultaneously.

5. The brittle object cutting apparatus of claim 4, wherein a machining direction of the scribing laser in the scribing optical path (132), the heating laser in the first heating optical path (221) and the coolant is opposite to a machining direction of the scribing laser in the scribing optical path (132), the heating laser in the second heating optical path (231) and the coolant.

6. The brittle object cutting apparatus of claim 4 or 5, wherein the scribing laser is configured for scribing the plurality of first-axis dividing lines with a predetermined distance (D), originated from an edge of the brittle object (9), on the brittle object (9), and the scribing laser is further configured for scribing the plurality of second-axis dividing lines completely or for only scribing intersections between the plurality of first-axis and second-axis dividing lines with the predetermined distance (D) on the brittle object (9).

7. A method of cutting a brittle object (9) with a plurality of first-axis and second-axis dividing lines, comprising steps of:
providing a scribing laser unit (13) to emit a scribing laser (131);
providing a first heating laser unit (11) to emit a first heating laser (111);
providing a second heating laser unit (12) to emit a second heating laser (121);
scribing the brittle object (9) by emitting the scribing laser (131) along one of the plurality of first-axis and second-axis dividing lines on the brittle object (9); and
heating the brittle object (9) by selectively applying the first heating laser (111) or the second heating laser (121) and cooling the heated brittle object (9) via a coolant providing by a cooling unit (14A, 14B) right after heating by the first heating laser (111) or the second heating laser (121) along one of the plurality of first-axis and second-axis dividing lines, wherein the scribing step, and the heating step and the cooling step are performed in the same machining operation.

8. The method of claim 7, further comprising the step of:
adjusting emitting positions of the first heating laser (111) and the second heating laser (121), respectively, on the brittle object (9) to be at lateral sides of an emitting position of the scribing laser (131) on the brittle object (9).

9. The method of claim 8, wherein a machining direction of the scribing laser (131), the first heating laser (111) and the coolant is opposite to a machining direction of the scribing laser (131), the second heating laser (121) and the coolant.

10. The method of claim 9, further comprising the step of:
controlling the scribing laser (131) to scribe the plurality of first-axis dividing lines with a predetermined distance (D), originated from an edge of the brittle object (9), on the brittle object (9).

11. The method of claim 10, further comprising the step of:
controlling the scribing laser (131) to scribe the plurality of second-axis dividing lines completely or only scribes intersections between the plurality of first-axis dividing lines and the plurality of second-axis dividing lines with the predetermined distance (D) on the brittle object (9).

## Patentansprüche

1. Vorrichtung zum Schneiden eines spröden Gegenstands (9), mit:
einer Schreiblasereinheit (13), die dafür konfiguriert ist, einen Schreiblaserstrahl (131) auf den spröden Gegenstand (9) zu emittieren;
einer ersten Heizlasereinheit (11), die dafür konfiguriert ist, einen ersten Heizlaserstrahl (111) zu emittieren;
einer zweiten Heizlasereinheit (12), die dafür konfiguriert ist, einen zweiten Heizlaserstrahl (121) zu emittieren,
wobei der erste Heizlaserstrahl (111) und der zweite Heizlaserstrahl (121) jeweils auf gegenüberliegenden Seiten des Schreiblaserstrahls (131) angeordnet sind;
zwei Kühleinheiten (14A, 14B), die dafür konfiguriert sind, ein Kühlmittel zum Kühlen des spröden Gegenstands (9) bereitstellen, wobei eine der beiden Kühleinheiten (14A) auf einer Seite des ersten Heizlaserstrahls (111) und gegenüberliegend dem Schreiblaserstrahl (131) angeordnet ist, um den durch den ersten Heizlaserstrahl (111) bestrahlten spröden Gegenstand (9) zu kühlen, und wobei die andere der beiden Kühleinheiten (14B) auf einer Seite des zweiten Heizlaserstrahls (121) und gegenüberliegend dem Schreiblaserstrahl (131) angeordnet ist, um den durch den zweiten Heizlaserstrahl (121) bestrahlten spröden Gegenstand (9) zu kühlen; und
einem Verarbeitungsmodul (15), das dafür konfiguriert ist, die Schreiblasereinheit (13), die erste Heizlasereinheit (11) und die Kühleinheit (14A) oder die Schreiblasereinheit (13), die zweite Heizlasereinheit (12) und die Kühleinheit (14B) selektiv zu steuern, um einen Schneidvorgang entlang einer von mehreren Trennlinien auf einer ersten Achse und einer zweiten Achse auf dem spröden Gegenstand (9) mit dem Schreiblaserstrahl (131), dem ersten Heizlaserstrahl (111) und dem Kühlmittel, oder mit dem Schreiblaserstrahl (131), dem zweiten Heizlaserstrahl (121) und dem Kühlmittel in einem Bearbeitungsvorgang sequentiell auszuführen, wobei der spröde Gegenstand (9) durch den ersten Heizlaserstrahl (111) und das Kühlmittel oder durch den zweiten Heizlaserstrahl (121) und das Kühlmittel gleichzeitig bearbeitet wird.

2. Vorrichtung nach Anspruch 1, wobei eine Bearbeitungsrichtung des Schreiblaserstrahls (131), des ersten Heizlaserstrahls (111) und des Kühlmittels einer Bearbeitungsrichtung des Schreiblaserstrahls (131), des zweiten Heizlaserstrahls (121) und des Kühlmittels entgegengesetzt ist.

3. Vorrichtung nach Anspruch 1 oder 2, wobei der Schreiblaserstrahl (131) dafür konfiguriert ist, die mehreren Trennlinien auf der ersten Achse mit einem vorgegebenen Abstand (D) ausgehend von einem Rand des spröden Gegenstands (9) auf dem spröden Gegenstand (9) anzuritzen, und der Schreiblaserstrahl (131) ferner dafür konfiguriert ist, die mehreren Trennlinien auf der zweiten Achse durchgehend oder nur Anritzschnittpunkte zwischen den mehreren Trennlinien auf der ersten Achse und der zweiten Achse mit dem vorgegebenen Abstand (D) auf dem spröden Gegenstand (9) anzuritzen.

4. Vorrichtung zum Schneiden eines spröden Gegenstands, mit:
einer Schreiblasereinheit (13), die dafür konfiguriert ist, einen Schreiblaserstrahl über einen optischen Schreibpfad (132) auf das spröde Gegenstand (9) zu emittieren;
einer Heizlasereinheit (21), die dafür konfiguriert ist, einen Heizlaserstrahl zu emittieren;
einer ersten Lichtleitereinheit (22), die dafür konfiguriert ist, den Heizlaserstrahl selektiv zu führen, so dass er den spröden Gegenstand (9) über einen ersten optischen Heizpfad (221) aufheizt oder die erste Lichtleitereinheit (22) durchläuft, oder dafür konfiguriert ist, einen Teil des Heizlaserstrahls derart zu führen, dass er den ersten optischen Heizpfad (221) durchläuft, und einen anderen Teil des Heizlaserstrahls derart zu führen, dass er die erste Lichtleitereinheit (221) durchläuft;
einer zweiten Lichtleitereinheit (23), die dafür konfiguriert ist, den von der ersten Lichtleitereinheit (22) durchgelassenen Heizlaserstrahl zu führen, um den spröden Gegenstand (9) über einen zweiten optischen Heizpfad (231) aufzuheizen, wobei der erste optische Heizpfad (221) und der zweite optische Heizpfad (231) jeweils auf gegenüberliegenden Seiten des optischen Schreibpfads (132) angeordnet sind, wenn die Laserstrahlen über den ersten optischen Heizpfad (221), den zweiten optischen Heizpfad (231) und den optischen Schreibpfad (132) auf den spröden Gegenstand (9) emittiert werden;
zwei Kühleinheiten (14A, 14B), die dafür konfiguriert sind, ein Kühlmittel zum Kühlen des spröden Gegenstands (9) bereitstellen, wobei eine der beiden Kühleinheiten (14A) auf einer Seite des ersten optischen Heizpfads (221) und gegenüber dem Schreiblaserstrahl angeordnet ist, um den durch den ersten Heizlaserstrahl bestrahlten spröden Gegenstand (9) zu kühlen, und wobei die andere der beiden Kühleinheiten (14B) auf einer Seite des zweiten optischen Heizpfads (231) und gegenüber dem Schreiblaserstrahl angeordnet ist, um den durch den zweiten Heizlaserstrahl bestrahlten spröden Gegenstand (9) zu kühlen; und
einem Verarbeitungsmodul (15), das dafür konfiguriert ist, die Schreiblasereinheit (13), die Heizlasereinheit (21), die erste Lichtleitereinheit (22) und die Kühleinheit (14A) selektiv zu steuern, um einen Schneidvorgang entlang einer von mehreren Trennlinien auf einer ersten Achse und auf einer zweiten Achse auf dem spröden Gegenstand (9) mit dem Schreiblaserstrahl im optischen Schreibpfad (132), dem Heizlaserstrahl im ersten optischen Heizpfad (221) und dem Kühlmittel oder mit dem Schreiblaserstrahl im optischen Schreibpfad (132), dem Heizlaserstrahl im zweiten optischen Heizpfad (231) und dem Kühlmittel in einem Bearbeitungsvorgang sequentiell auszuführen, wobei der spröde Gegenstand (9) durch den Heizlaserstrahl im ersten optischen Heizpfad (221) und das Kühlmittel oder durch den Heizlaserstrahl im zweiten optischen Heizpfad (231) und das Kühlmittel gleichzeitig bearbeitet wird.

5. Vorrichtung nach Anspruch 4, wobei eine Bearbeitungsrichtung des Schreiblaserstrahls im optischen Schreibpfad (132), des Heizlaserstrahls im ersten optischen Heizpfad (221) und des Kühlmittels einer Bearbeitungsrichtung des Schreiblaserstrahls im optischen Schreibpfad (132), des Heizlaserstrahls im zweiten optischen Heizpfad (231) und des Kühlmittels entgegengesetzt ist.

6. Vorrichtung nach Anspruch 4 oder 5, wobei der Schreiblaserstrahl dafür konfiguriert ist, die mehreren Trennlinien auf der ersten Achse mit einem vorgegebenen Abstand (D) ausgehend von einem Rand des spröden Gegenstands (9) auf dem spröden Gegenstand (9) anzuritzen, und der Schreiblaserstrahl ferner dafür konfiguriert ist, die mehreren Trennlinien auf der zweiten Achse durchgehend oder nur für Schnittpunkte zwischen den mehreren Trennlinien auf der ersten Achse und auf der zweiten Achse mit dem vorgegebenen Abstand (D) auf dem spröden Gegenstand (9) anzuritzen.

7. Verfahren zum Schneiden eines spröden Gegenstands (9) mit mehreren Trennlinien auf einer ersten und auf einer zweiten Achse, mit den Schritten:
Bereitstellen einer Schreiblasereinheit (13) zum Emittieren eines Schreiblaserstrahls (131);
Bereitstellen einer ersten Heizlasereinheit (11) zum Emittieren eines ersten Heizlaserstrahls (111);
Bereitstellen einer zweiten Heizlasereinheit (12) zum Emittieren eines zweiten Heizlaserstrahls (121);
Anritzen des spröden Gegenstands (9) durch Emittieren des Schreiblaserstrahls (131) entlang einer von mehreren Trennlinien auf der ersten Achse und auf der zweiten Achse auf dem spröden Gegenstand (9); und
Aufheizen des spröden Gegenstands (9) durch selektives Zuführen des ersten Heizlaserstrahls (111) oder des zweiten Heizlaserstrahls (121) und Abkühlen des aufgeheizten spröden Gegenstands (9) durch ein Kühlmittel, das durch eine Kühleinheit (14A, 14B) bereitgestellt wird, direkt nach dem Aufheizen durch den ersten Heizlaserstrahl (111) oder den zweiten Heizlaserstrahl (121) entlang einer der mehreren Trennlinien auf der ersten Achse und auf der zweiten Achse, wobei der Anritzschritt und der Heizschritt und der Kühlschritt im gleichen Bearbeitungsvorgang ausgeführt werden.

8. Verfahren nach Anspruch 7, ferner mit dem Schritt:
Einstellen von Emissionspositionen des ersten Heizlaserstrahls (111) und des zweiten Heizlaserstrahls (121) auf dem spröden Gegenstand (9) derart, dass sie sich an lateralen Seiten einer Emissionsposition des Schreiblaserstrahls (131) auf dem spröden Gegenstand (9) befinden.

9. Verfahren nach Anspruch 8, wobei eine Bearbeitungsrichtung des Schreiblaserstrahls (131), des ersten Heizlaserstrahls (111) und des Kühlmittels einer Bearbeitungsrichtung des Schreiblaserstrahls (131), des zweiten Heizlaserstrahls (121) und des Kühlmittels entgegengesetzt ist.

10. Verfahren nach Anspruch 9, ferner mit dem Schritt:
Steuern des Schreiblaserstrahls (131), um die mehreren Trennlinien auf der ersten Achse mit einem vorgegebenen Abstand (D) ausgehend von einem Rand des spröden Gegenstands (9) auf dem spröden Gegenstand (9) anzuritzen.

11. Verfahren nach Anspruch 10, ferner mit dem Schritt:
Steuern des Schreiblaserstrahls (131), um die mehreren Trennlinien auf der zweiten Achse durchgehend anzuritzen oder nur Schnittpunkte zwischen den mehreren Trennlinien auf der ersten Achse und den mehreren Trennlinien auf der zweiten Achse mit dem vorgegebenen Abstand (D) auf dem spröden Gegenstand (9) anzuritzen.

## Revendications

1. Appareil coupant d'objet fragile prévu pour couper un objet fragile (9) comprenant :
une unité laser de traçage (13), conçue pour émettre un rayonnement laser de traçage (131) sur l'objet fragile (9),
une première unité laser de chauffage (11), configurée pour émettre un premier rayonnement laser de chauffage (111) ;
une seconde unité laser de chauffage (12), configurée pour émettre un second rayonnement laser de chauffage (121),
le premier rayonnement laser de chauffage (111) et le second rayonnement de chauffage (121) étant respectivement situés sur des côtés opposés du rayonnement laser de traçage (131) ;
deux unités de refroidissement (14A, 14B), configurées pour fournir un produit de refroidissement afin de refroidir l'objet fragile (9), l'une des deux unités de refroidissement (14A) étant disposée au niveau d'un côté du premier rayonnement laser de chauffage (111) et à l'opposé du rayonnement laser de traçage (131) de sorte à refroidir l'objet fragile (9) irradié par le premier rayonnement laser de chauffage (111), une autre des deux unités de refroidissement (14B) étant disposée sur un côté du second rayonnement laser de chauffage (121) et à l'opposé du rayonnement laser de traçage (131) de sorte à refroidir l'objet fragile (9) irradié par le second rayonnement laser de chauffage (121) ; et
un module de traitement (15), configuré pour commander sélectivement l'unité laser de traçage (13), la première unité laser de chauffage (11) et l'unité de refroidissement (14A), ou l'unité laser de traçage (13), la seconde unité laser de chauffage (12) et l'unité de refroidissement (14B), pour couper le long d'une ligne parmi une pluralité de lignes divisant le premier axe et le second axe sur l'objet fragile (9) de manière séquentielle avec le rayonnement laser de traçage (131), le premier rayonnement laser de chauffage (111) et le produit de refroidissement, ou de manière séquentielle avec le rayonnement laser de traçage (131), le second rayonnement laser de chauffage (121) et le produit de refroidissement dans une opération d'usinage, où le premier rayonnement laser de chauffage (111) et le produit de refroidissement, ou le second rayonnement laser de chauffage (121) et le produit de refroidissement agissent sur l'objet fragile (9) de manière simultanée.

2. Appareil coupant d'objet fragile selon la revendication 1, dans lequel une direction d'usinage du rayonnement laser de traçage (131), du premier rayonnement laser de chauffage (111) et du produit de refroidissement est opposée à une direction d'usinage du rayonnement de traçage (131), du second rayonnement de chauffage (121) et du produit de refroidissement.

3. Appareil coupant d'objet fragile selon la revendication 1 ou la revendication 2, dans lequel le rayonnement laser de traçage (131) est configuré pour tracer une pluralité de lignes divisant le premier axe à une distance (D) prédéterminée, partant d'un bord de l'objet fragile (9), sur l'objet fragile (9), et le rayonnement laser de traçage (131) est en outre configuré pour tracer la pluralité des lignes divisant le second axe de manière complète ou uniquement à des intersections de traçage entre la pluralité des lignes divisant le premier axe et le second axe à la distance (D) prédéterminée sur l'objet fragile (9).

4. Appareil coupant d'objet fragile pour couper un objet fragile, comprenant :
une unité laser de traçage (13), configurée pour émettre un rayonnement laser de traçage sur l'objet fragile (9) par le biais d'un chemin optique de traçage (132) ;
une unité laser de chauffage (21) configurée pour émettre un rayonnement laser de chauffage ;
une première unité guide de lumière (22), configurée pour guider sélectivement le laser de chauffage pour chauffer l'objet fragile (9) par le biais d'un premier chemin optique de chauffage (221) ou pour passer par la première unité guide de lumière (22), ou configurée pour guider une partie du rayonnement laser de chauffage pour passer par le premier chemin optique de chauffage (221) et une autre partie du rayonnement laser de chauffage pour passer à travers la première unité de guide de lumière (221) ;
une seconde unité de guide de lumière (23), configurée pour guider le rayonnement laser de chauffage étant passé à partir de la première unité de guide de lumière (22) pour chauffer l'objet fragile (9) par le biais d'un second chemin optique de chauffage (231), où le premier chemin optique de chauffage (221) et le second chemin optique de chauffage (231), sont respectivement situés sur des côtés opposés du chemin optique de traçage (132) lorsque le premier chemin optique de chauffage (221), le second chemin optique de chauffage (231) et le chemin optique de traçage (132) sont émis sur l'objet fragile (9) ;
deux unités de refroidissement (14A, 14B), configurées pour fournir un produit de refroidissement afin de refroidir l'objet fragile (9), une des deux unités de refroidissement (14A) étant disposée au niveau d'un côté du premier chemin optique de chauffage (221) et à l'opposé du rayonnement laser de traçage de sorte à refroidir l'objet fragile (9) irradié par le premier rayonnement laser de chauffage, une autre parmi les deux unités de refroidissement (14B) étant disposée au niveau d'un côté du second chemin optique de chauffage (231) et à l'opposé du rayonnement laser de traçage de sorte à refroidir l'objet fragile (9) irradié par le second rayonnement laser de chauffage ; et
un module de traitement (15), configuré pour commander sélectivement l'unité laser de traçage (13), l'unité laser de chauffage (21), la première unité de guide de lumière (22) et l'unité de refroidissement (14A), pour couper le long d'une ligne parmi une pluralité de lignes divisant le premier axe et le second axe sur l'objet fragile (9) de manière séquentielle avec le rayonnement laser de traçage dans le chemin optique de traçage (132), le rayonnement laser de chauffage dans le premier chemin optique de chauffage (221) et le produit de refroidissement, ou de manière séquentielle avec le rayonnement laser de traçage dans le chemin optique de traçage (132), le rayonnement laser de chauffage dans le second chemin optique de chauffage (231) et le produit de refroidissement dans une opération d'usinage, où le rayonnement laser de chauffage dans le premier chemin optique de chauffage (221) et le produit de refroidissement, ou le rayonnement laser de chauffage dans le second chemin optique de chauffage (231) et le produit de refroidissement agissent sur l'objet fragile (9) de manière simultanée.

5. Appareil coupant d'objet fragile selon la revendication 4, dans lequel une direction d'usinage du rayonnement laser de traçage dans le chemin optique de traçage (132), du rayonnement laser de chauffage dans le premier chemin optique de chauffage (221) et du produit de refroidissement est opposée à une direction d'usinage du rayonnement laser de traçage dans le chemin optique de traçage (132), du rayonnement laser de chauffage dans le second chemin optique de chauffage (231) et du produit de refroidissement.

6. Appareil coupant d'objet fragile selon la revendication 4 ou la revendication 5, dans lequel le rayonnement laser de traçage est configuré pour tracer la pluralité des lignes divisant le premier axe avec une distance (D) prédéterminée, partant d'un bord de l'objet fragile (9), sur l'objet fragile (9), et le rayonnement laser de traçage est en outre configuré pour tracer la pluralité des lignes divisant le second axe complètement ou uniquement à des intersections de traçage entre la pluralité des lignes divisant le premier axe et le second axe avec la distance (D) prédéterminée sur l'objet fragile (9).

7. Procédé de coupe d'un objet fragile (9) avec une pluralité de lignes divisant le premier axe et le second axe, comprenant les étapes :
de mise au point d'une unité laser de traçage (13) pour émettre un rayonnement laser de traçage (131) ;
de mise au point d'une première unité de chauffage (11) pour émettre un premier rayonnement laser de chauffage (111) ;
de mise au point d'une seconde unité de chauffage (12) pour émettre un second rayonnement laser de chauffage (121) ;
de traçage de l'objet fragile (9) en émettant le rayonnement laser de traçage (131) le long d'une ligne parmi la pluralité des lignes divisant le premier axe et le second axe sur l'objet fragile (9) ; et
de chauffage de l'objet fragile (9) en appliquant sélectivement le premier rayonnement laser de chauffage (111) ou le second rayonnement laser de chauffage (121) et de refroidissement de l'objet fragile (9) chauffé, par le biais d'un produit de refroidissement fourni par une unité de refroidissement (14A, 14B), juste après le chauffage par le premier rayonnement laser de chauffage (111) ou le second rayonnement laser de chauffage (121) le long d'une ligne parmi la pluralité des lignes divisant le premier axe et le second axe, où l'étape de traçage, l'étape de chauffage et l'étape de refroidissement sont réalisées dans la même opération d'usinage.

8. Procédé selon la revendication 7, comprenant en outre l'étape :
d'ajustement de positions d'émissions du premier rayonnement laser de chauffage (111) et du second rayonnement laser de chauffage (121), respectivement, sur l'objet fragile (9) devant être au niveau de côtés latéraux d'une position d'émission du rayonnement laser de traçage (131) sur l'objet fragile (9).

9. Procédé selon la revendication 8, dans lequel une direction d'usinage du rayonnement laser de traçage (131), du premier rayonnement laser de chauffage (111) et du produit de refroidissement est opposée à une direction d'usinage du rayonnement laser de traçage (131), du second rayonnement de chauffage (121) et du produit de refroidissement.

10. Procédé selon la revendication 9, comprenant en outre l'étape :
de commande du rayonnement laser de traçage (131) pour tracer la pluralité des lignes divisant le premier axe avec une distance (D) prédéterminée, partant d'un bord de l'objet fragile (9), sur l'objet fragile (9).

11. Procédé selon la revendication 10, comprenant en outre l'étape :
de commande du rayonnement laser de traçage (131) pour tracer la pluralité des lignes divisant le second axe complètement ou uniquement à des intersections de traçage entre la pluralité des lignes divisant le premier axe et la pluralité des lignes divisant le second axe avec la distance (D) prédéterminée sur l'objet fragile (9).
